# EUROPEAN PATENT APPLICATION

(11) **EP 4 664 575 A1**
(43) Date of publication of application: **17.12.2025**
(21) Application number: 24877532.2
(22) Date of filing: 11.10.2024
(51) Int. Cl.: H01M 10/04, B30B 15/34

(54) **PLATE FOR MANUFACTURING ELECTRODE ASSEMBLY, APPARATUS FOR MANUFACTURING ELECTRODE ASSEMBLY, AND METHOD FOR MANUFACTURING ELECTRODE ASSEMBLY**

(30) Priority: 12.10.2023 KR 20230135772; 10.10.2024 KR 20240137536
(71) Applicant: LG Energy Solution, Ltd., Seoul 07335 (KR)
(72) Inventor: KWON, Yongjun, Daejeon 34122 (KR); KIM, Jong Seok, Daejeon 34122 (KR); HONG, Sunggeun, Daejeon 34122 (KR)
(74) Representative: Plasseraud IP
(86) International application number: PCT/KR2024/015357
(87) International publication number: WO 2025/079996

(57) **Abstract**

The present invention relates to an electrode assembly manufacturing plate, which includes a support plate, a sub-plate provided on one surface of the support plate, and a distance control unit provided on the support plate and configured to push a part of an opposing surface to a surface of the sub-plate, which is opposite to the support plate, from the support plate so that a distance from a part of the opposing surface to the support plate is different from a distance from the remaining portion to the support plate, an electrode assembly manufacturing apparatus including the same, and an electrode assembly manufacturing method.

## Description

### [Technical Field]

The present invention relates to an electrode assembly manufacturing plate, an electrode assembly manufacturing apparatus, and an electrode assembly manufacturing method.

The present application claims priority to and the benefit of Korean Patent Application No. 10-2023-0135772 filed with the Korean Intellectual Property Office on October 12, 2023, and Korean Patent Application No. 10-2024-0137536 filed with the Korean Intellectual Property Office on October 10, 2024, the entire contents of which are incorporated herein by reference.

### [Background Art]

Unlike primary batteries, secondary batteries may be rechargeable and have small scales and high capacities. Recently, research and development have been actively conducted on the secondary batteries. As development of technologies and demands for mobile devices have increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

A separator including a binder having a bonding force may be used to manufacture an electrode assembly. An electrode and the separator may be bonded by heating and pressing the electrode assembly including the separator. Therefore, a stacked structure of the electrode and the separator, which constitute the electrode assembly, may be stable. In addition, in order to uniformly bond the electrode and the separator, the electrode and the separator may be preheated before the electrode assembly is heated and pressed.

### [Detailed Description of the Invention]

### [Technical Problem]

The present inventors have found that an electrode assembly adheres to a stack table or a pressing plate when the electrode assembly including an electrode and a separator is pressed and/or heated, which causes a problem in that efficiency of an electrode assembly manufacturing process deteriorates. The present inventors have found that the electrode assembly may be damaged during a process of separating the electrode assembly from the stack table or the pressing plate.

The present invention provides an electrode assembly manufacturing plate, which is provided to improve process efficiency and prevent damage to an electrode assembly by preventing adherence of the electrode assembly during a process of manufacturing the electrode assembly, an electrode assembly manufacturing apparatus including the same, and an electrode assembly manufacturing method including the same.

### [Technical Solution]

An embodiment of the present invention provides an electrode assembly manufacturing plate including: a support plate; a sub-plate provided on one surface of the support plate; and a distance control unit provided on the support plate and configured to push a part of an opposing surface to a surface of the sub-plate, which is opposite to the support plate, from the support plate so that a distance from a part of the opposing surface to the support plate is different from a distance from the remaining portion to the support plate.

According to the embodiment, the distance control unit may be a vertical drive unit configured to support a part of the sub-plate and move in a vertical direction relative to one surface of the support plate.

According to the embodiment, the electrode assembly manufacturing plate may further include: an auxiliary support unit provided on the support plate and configured to support at least a part of an edge portion of the sub-plate when a position of the edge portion of the sub-plate is changed by a change in distance from a part of the sub-plate to the support plate.

According to the embodiment, the sub-plate may have a structure that is inflated when air is injected into the sub-plate, and the distance control unit may be an air blowing unit configured to inject air into the sub-plate.

Another embodiment of the present invention provides an electrode assembly manufacturing apparatus including: upper and lower plates configured to press an electrode assembly including a first electrode, a separator, and a second electrode, in which at least one of the upper plate and the lower plate includes the electrode assembly manufacturing plate according to the above-mentioned embodiment.

Still another embodiment of the present invention provides an electrode assembly manufacturing apparatus including: a stack table on which an electrode assembly including a first electrode, a separator, and a second electrode is placed; a first electrode supply part configured to supply the first electrode to the stack table; a second electrode supply part configured to supply the second electrode to the stack table; and a separator supply part configured to supply the separator to the stack table, in which the stack table includes the electrode assembly manufacturing plate according to the above-mentioned embodiment.

Yet another embodiment of the present invention provides a method of manufacturing an electrode assembly including a first electrode, a separator, and a second electrode, the method including: disposing a stack, which includes the first electrode, the separator, and the second electrode, between upper and lower plates; forming the electrode assembly by pressing the stack by moving at least one of the upper plate and the lower plate; and separating the electrode assembly from the upper plate and the lower plate, in which at least one of the upper plate and the lower plate includes the electrode assembly manufacturing plate according to the above-mentioned embodiment.

Still yet another embodiment of the present invention provides a method of manufacturing an electrode assembly including a first electrode, a separator, and a second electrode, the method including: a stacking step of stacking a stack, which includes the first electrode, the separator, and the second electrode, on a stack table; forming the electrode assembly by heating and pressing the stack; and separating the electrode assembly from the stack table, in which the stack table includes the electrode assembly manufacturing plate according to the above-mentioned embodiment.

### [Advantageous Effects]

According to the electrode assembly manufacturing plate, the electrode assembly manufacturing apparatus including the same, and the electrode assembly manufacturing method including the same according to the embodiment of the present invention, the electrode assembly may be quickly separated from the plate or the manufacturing apparatus, which may shorten the time for which the electrode assembly is manufactured.

According to the electrode assembly manufacturing plate, the electrode assembly manufacturing apparatus including the same, and the electrode assembly manufacturing method including the same according to the embodiment of the present invention, it is possible to prevent damage to the electrode assembly caused by adherence of the electrode assembly, thereby providing the electrode assembly with excellent, uniform performance.

Therefore, it is possible to improve the process efficiency by shortening the manufacturing time and reducing a product defect.

### [Brief Description of Drawings]

FIGS. 1 to 5 are views illustrating a structure and an operational principle of an electrode assembly manufacturing plate according to embodiments of the present invention.
FIGS. 6 and 7 are views illustrating an electrode assembly manufacturing apparatus including the electrode assembly manufacturing plate according to the embodiment of the present invention.
FIG. 8 is a cross-sectional view exemplarily illustrating an electrode assembly manufactured by the manufacturing apparatus according to the embodiments of the present invention and having a shape stacked in a zigzag manner.

### [Explanation of Reference Numerals and Symbols]

1: Vertical drive unit
2, 3: Horizontal drive unit
2a, 3a: Elastic member (before stretched)
2a', 3a': Elastic member (after stretched)
2b, 3b: Gripper
2c, 3c: Support part
2d, 3d: Stopper
2e, 3e: Guide part
5: Support plate
6: Sub-plate
7: Electrode assembly manufacturing plate
10: Electrode assembly
11: First electrode
12: Second electrode
14: Separator
20, 100: Electrode assembly manufacturing apparatus
21: Upper plate
22: Lower plate
110: Stack table
120: Separator supply part
121: Separator heating part
122: Separator roll
131: First electrode accommodation portion
141: Second electrode accommodation portion
150: First electrode supply part
151: First suction head
153: First movement part
160: Second electrode supply part
161: Second suction head
163: Second movement part
T: Protruding portion
h: Height of protruding portion
q: Interval between protruding portions
M: Middle portion

### [Best Mode]

Hereinafter, the present invention will be described in detail so that those with ordinary skill in the art to which the present invention pertains may easily carry out the present invention. However, the present invention may be implemented in various different ways and is not limited to the embodiments described herein.

A size and thickness of each constituent element illustrated in the drawings are arbitrarily shown for convenience of description, but the present invention is not limited thereto.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the term "part" means an interface that performs a particular function in an electrode assembly manufacturing apparatus.

In the present specification, when one component is described as being positioned "above" or "on" another component, one component can be positioned "directly on" another component, and one component can also be positioned on another component with other components interposed therebetween. On the contrary, when one component is described as being positioned "directly above" another component, there is no component therebetween. In addition, when a component is described as being positioned "above" or "on" a reference part, the component may be positioned "above" or "below" the reference part, and this configuration does not necessarily mean that the component is positioned "above" or "on" the reference part in a direction opposite to gravity.

In the following description of the present invention, the specific descriptions of well-known related technologies will be omitted when it is determined that the specific descriptions may unnecessarily obscure the subject matter of the present invention.

### <Electrode Assembly Manufacturing Plate>

An electrode assembly manufacturing plate according to the present invention is characterized by including a support plate and a sub-plate provided on one surface of the support plate and further including a distance control unit.

The distance control unit serves to push a part of an opposing surface to a surface of the sub-plate, which is opposite to the support plate, from the support plate so that a distance from the opposing surface to the support plate is different from a distance from the remaining portion to the support plate. In this case, the entire sub-plate may be pushed from the support plate. Alternatively, only the opposing surface to the surface of the sub-plate opposite to the support plate, i.e., only a part of a top surface of the sub-plate may be pushed from the support plate. With the function of the distance control unit, the opposing surface to the surface of the sub-plate opposite to the support plate has a non-flat structure, such that a contact area of an electrode assembly, which is disposed on the sub-plate, with respect to the sub-plate may be reduced, and the electrode assembly may be easily separated from the sub-plate. Therefore, it is possible to shorten a process time and prevent damage to the electrode assembly.

The sub-plate is separably provided on the support plate. Because the sub-plate is present separately from the support plate, the sub-plate not only serves to easily separate the electrode assembly, as described above, but also is configured to be replaceable by being separated from the electrode assembly manufacturing plate, when necessary, such as when the sub-plate is aged or contaminated.

The sub-plate may be made of a flexible material so that at least one surface thereof is reversibly transformed from a flat state to a non-flat state by the distance control unit. For example, the sub-plate may be a polymer sheet. The sub-plate, such as a polymer sheet, made of a flexible material is present in the flat state during a stacking process, a pressing process, and/or a heating process for manufacturing the electrode assembly and does not hinder the processes. When the electrode assembly is separated from the sub-plate after the processes are performed, the sub-plate is transformed to the non-flat state by the distance control unit, such that the electrode assembly may be quickly separated from the support plate without being damaged.

A thickness or a material of the sub-plate is not specially limited as long as the sub-plate does not hinder the functional performance of the above-mentioned processes. For example, the sub-plate may be a polymer sheet without being specially limited as long as the sub-plate is not damaged under pressure and temperature conditions applied during the processes in case that the pressing and heating processes are performed. For example, a thickness of the polymer sheet may be 100 to 160 µm, particularly, 110 to 150 µm. For example, the polymer sheet may include fluorine resin. More specifically, the polymer sheet may be made of fluorine resin. For example, the polymer sheet may include polytetrafluoroethylene (PTFE). More specifically, the polymer sheet may be made of polytetrafluoroethylene. The polytetrafluoroethylene is also called Teflon.

A material or a structure of the support plate is not limited as long as the material or the structure of the support plate has properties required for the process of manufacturing the electrode assembly. For example, the support plate may include a metal layer provided on a surface opposite to the sub-plate, or the entire support plate may be a metal layer. The metal layer may include aluminum or stainless steel. The stainless steel may be STS or SUS. For example, a surface of the metal layer may be made of aluminum. More specifically, the metal layer may be made of aluminum. The support plate may include only the metal layer. As necessary, the support plate may include an additional support layer that supports the metal layer.

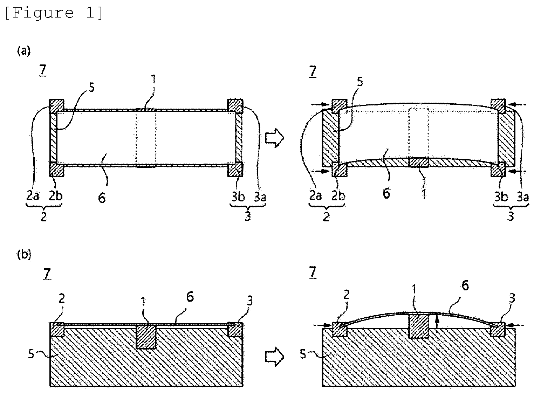

FIG. 1 illustrates a structure and an operational principle of an electrode assembly manufacturing plate 7 according to a first embodiment. FIG. 1A is a top plan view of the plate 7, and FIG. 1B is a side view of the plate 7. According to FIG. 1, the distance control unit is a vertical drive unit 1 configured to support a part of the sub-plate 6 and move in a vertical direction relative to one surface of the support plate 5. The vertical drive unit 1 supports a part of the sub-plate 6 and is positioned so that the sub-plate 6 is present in the flat state during the stacking process, the pressing process, and/or the heating process, as illustrated in the left views in FIG. 1A and 1B. As illustrated in the right views in FIG. 1A and 1B, after the processes, a part of the sub-plate 6 is pushed from the support plate 5, such that the sub-plate 6 comes into the non-flat state.

A vertical movement distance of the vertical drive unit 1 may be designed to a degree to which the electrode assembly positioned on the sub-plate 6 may be easily separated. The vertical movement distance of the vertical drive unit 1 may be determined in consideration of sizes, contact areas, materials of contact portions, and the like of the electrode assembly and the sub-plate 6. For example, the vertical drive unit 1 may move to a height of 0.1 to 100 mm from the support plate 5.

An operating method of the vertical drive unit 1 is not specially limited as long as the vertical drive unit 1 may serve to push a part of the sub-plate from a support plate 5 and return to an original place by the above-mentioned vertical movement. For example, a method selected from various methods using cylinders, servo motors, and the like may be applied to the vertical drive unit 1.

The vertical drive unit 1 according to FIG. 1 supports a middle portion spaced apart from any one pair of edge portions of the sub-plate 6 opposite to each other. When necessary, the middle portion may support a central portion spaced apart, at the same distance, from any one pair of edge portions of the sub-plate 6 opposite to each other. In this case, by the movement of the vertical drive unit 1, the electrode assembly provided on the sub-plate 6 may be stably separated from the sub-plate 6 without separating to an inadvertent position.

A position of the vertical drive unit 1 and the number of vertical drive units 1 may be selected as necessary. For example, the position of the vertical drive unit 1 may be a position adjacent to the edge portion instead of the middle portion. In addition, only one vertical drive unit 1 may be provided, or two or more vertical drive units 1 may be provided.

A length and an area of a region in which the vertical drive unit 1 supports the sub-plate 6 may be designed to a degree to which the non-flat state of the sub-plate 6 is implemented as described above. As illustrated in FIG. 1, the vertical drive unit 1 may be designed to support an overall width (100%) of the sub-plate 6. For example, the vertical drive unit 1 may be provided to support 50% or more of the width of the sub-plate, or the vertical drive unit 1 may have a bar shape provided to support 90% or more of the width of the sub-plate. In this case, in case that one surface of the sub-plate has a quadrangular shape, the width of the sub-plate refers to a short distance among distances between sides of the quadrangular shape opposite to each other. In case that one surface of the sub-plate has a quadrangular shape, the length of the sub-plate refers to a long distance along distances between sides of the quadrangular shape opposite to each other. In addition, an area corresponding to 1% or more, e.g., 3% or more, 5% or more, or 10% or more of an area in which the sub-plate 6 adjoins the electrode assembly may be supported by the vertical drive unit 1. An area corresponding to 90% or less, e.g., 70% or less, or 50% or less of the area in which the sub-plate 6 adjoins the electrode assembly may be supported by the vertical drive unit 1.

The case in which a surface of the vertical drive unit 1, which supports the sub-plate 6, is a flat surface may be advantageous in preventing the separation of the electrode assembly positioned on the sub-plate 6 even during the operation of the vertical drive unit 1. However, at least a part or the entirety of the surface of the vertical drive unit 1, which supports the sub-plate 6, may be provided as a curved surface as long as the inadvertent separation of the electrode assembly is not caused in accordance with a movement height or a support area of the vertical drive unit 1. In case that at least a part of the surface of the vertical drive unit 1, which supports the sub-plate 6, is a curved surface, it is possible to prevent the sub-plate 6 or the electrode assembly from being damaged or stretched when the vertical drive unit 1 operates during the process.

According to the embodiment, the electrode assembly manufacturing plate further includes auxiliary support units configured to support at least a part of an edge portion of the sub-plate. The auxiliary support unit is provided on the support plate and supports at least a part of the edge portion of the sub-plate even when the position of the edge portion of the sub-plate is changed by a change in distance from a part of the sub-plate to the support plate. The support area of the auxiliary support unit, which supports the sub-plate, may be determined, as necessary. For example, the support area of the auxiliary support unit may be smaller than a support area of the vertical drive unit that supports the sub-plate. The auxiliary support unit and the edge portion of the sub-plate may be fixed. The auxiliary support unit and the edge portion of the sub-plate may be fixed by a holding member, a bonding member, or an adhesive member.

According to FIG. 1, the auxiliary support units are the horizontal drive units 2 and 3 configured to move in a horizontal direction relative to one surface of the support plate. When the vertical drive unit 1 pushes the sub-plate 6 and forms the non-flat state, the edge portion of the sub-plate 6 moves toward the vertical drive unit 1. Specifically, as illustrated in FIG. 1B, because top surfaces of the vertical drive unit 1 and the horizontal drive units 2 and 3 have the same height before the vertical drive unit 1 and the horizontal drive units 2 and 3 operate, the sub-plate 6 supported by the vertical drive unit 1 and the horizontal drive units 2 and 3 is kept in the flat state.

In case that the vertical drive unit 1 moves in the vertical direction, a height of a portion supported by the vertical drive unit 1 and heights of portions by the horizontal drive units 2 and 3 are changed, such that the sub-plate 6 comes into the non-flat state. The above-mentioned non-flat state makes it easy to separate the electrode assembly positioned on the sub-plate 6. In this case, because the edge portion of the sub-plate 6 moves toward the vertical drive unit 1, the horizontal drive units 2 and 3 also move horizontally toward the vertical drive unit 1. Because the auxiliary support unit moves horizontally as described above, it is possible to prevent the sub-plate supported by the auxiliary support unit from being damaged or stretched and prevent inadvertent position separation of the electrode assembly provided on the sub-plate.

For example, the horizontal drive units 2 and 3 may be coupled to the support plate 5 by means of a rail structure and configured to move horizontally. The horizontal drive unit may use a motor, a cylinder, an elastic member, and the like.

For example, the auxiliary support unit may include an elastic member reversibly changeable in length or shape to implement the horizontal operation. Even though the position of the edge portion of the sub-plate 6 fixed to the auxiliary support unit is changed, the auxiliary support unit may support the edge portion of the sub-plate 6 in case that the length of the auxiliary support unit is increased or the shape of the auxiliary support unit is inclined or curved.

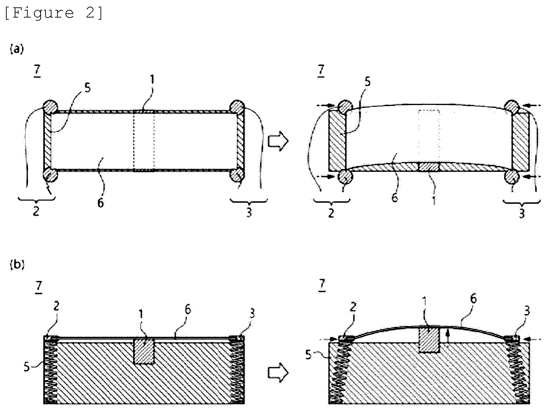

According to FIG. 2, the elastic member is a spring member. FIG. 2A is a top plan view of the plate 7, and FIG. 2B is a side view of the plate 7. As illustrated at the right side in FIG. 2, the spring member may support the edge portion of the sub-plate 6 by operating horizontally while being increased in length or inclined even though the sub-plate comes into the non-flat state and the edge portion moves.

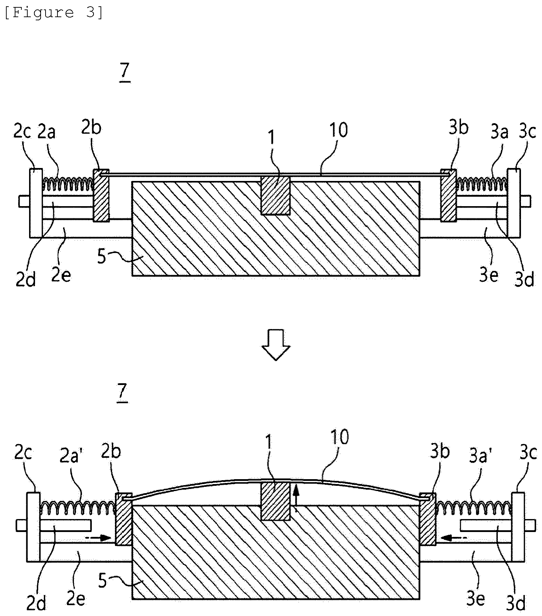

In addition, FIG. 3 exemplarily illustrates a structure in which elastic members 2a and 3a are disposed so that a distance is adjusted in the horizontal direction. When the sub-plate 6 is pushed from the support plate 5, lengths of elastic members 2a' and 3a' are increased, as illustrated at the lower end side in FIG. 3, such that the edge portion of the sub-plate 6 may be still supported.

According to FIG. 3, in addition to the elastic members 2a and 3a, the auxiliary support unit may further include grippers 2b and 3b configured to fix the edge portion of the sub-plate 6, and guide parts 2e and 3e configured to guide horizontal positions of the grippers 2b and 3b in accordance with the changes in lengths of the elastic members 2a and 3a. The grippers 2b and 3b may serve as connection parts between the edge portion of the sub-plate 6 and the elastic members 2a and 3a. The grippers 2b and 3b may include clamps configured to fix the sub-plate by fastening. The guide parts 2e and 3e may include rail structures configured to move the grippers 2b and 3b horizontally. As necessary, the auxiliary support unit may further include support parts 2c and 3c configured to fix the elastic members 2a and 3a, and/or stoppers 2d and 3d configured to limit minimum lengths of the elastic members 2a and 3a. The support parts 2c and 3c may additionally serve to change the positions thereof to adjust tension of the sub-plate in accordance with the changes in lengths of the elastic members 2a and 3a.

The number of auxiliary support units may be selected in accordance with the shape or size of the auxiliary support unit and the shape or size of the sub-plate. For example, in case that the sub-plate has a quadrangular shape, four horizontal drive units 2 and 3 may be provided to support four edge portions of the sub-plate, as illustrated in FIGS. 1 and 2. As another example, in case that the auxiliary support unit having a bar shape supports 50% or more, e.g., 90% or more of a length of the edge portion of the sub-plate, i.e., a length between the two adjacent edges, two auxiliary support units may be provided to respectively support any one pair of edge portions of the sub-plate opposite to each other (not illustrated).

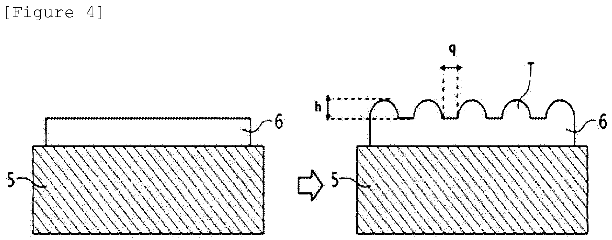

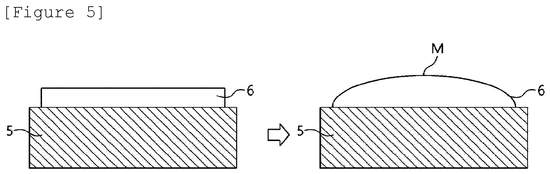

FIGS. 4 and 5 exemplarily illustrate a structure and an operational principle of an electrode assembly manufacturing plate according to a second embodiment. FIGS. 4 and 5 exemplarily illustrate a structure of the sub-plate 6 configured to be inflated when air is injected into the structure of the sub-plate 6. In this case, the distance control unit (not illustrated) is an air blowing unit configured to inject air into the sub-plate.

The air blowing unit may push the opposing surface of the sub-plate, which is opposite to the support plate, from the support plate. The sub-plate may have a hollow air tube shape capable of accommodating air therein and be made of a flexible material, specifically, silicone rubber so that the sub-plate may be brought into the non-flat state by the air blowing unit. As described above, the sub-plate has an air injection opening to inject air, and the air blowing unit may include an air supply part connected to the air injection opening of the sub-plate and configured to supply air.

For example, one surface of the sub-plate is fixed to the support plate. When air is injected into the sub-plate, a part of the other surface of the sub-plate is structured to be inflated so that a distance from a part of the other surface of the sub-plate to the support plate is different from the remaining portion. A method of fixing the sub-plate to the support plate is not specially limited. However, a physical binding method such as bolting may be employed.

For example, as illustrated in FIG. 4, the sub-plate has an air flow path having a particular pattern and thus has a structure in which two or more protruding portions T, which correspond to the air flow path and are spaced apart from one another, are inflated when air is injected into the sub-plate. In addition, as illustrated in FIG. 5, the sub-plate may have a structure configured to be inflated when air is injected thereinto so that a middle portion M, which is spaced apart from any one pair of edge portions of the other surface of the sub-plate opposite to each other, is positioned at a greater distance away from the support plate than the remaining portion.

A height h of the protruding portion T may be 0.5 to 1.5 mm, particularly 0.8 to 1.2 mm. With reference to FIG. 4, the height h of the protruding portion T refers to a distance between a portion of the sub-plate, which is not inflated, and a portion of the sub-plate, which is maximally inflated in the vertical direction, when the sub-plate is inflated by the air blowing unit. The contact between the sub-plate and the electrode assembly changes from surface contact to line contact as the height of the protruding portion T increases, such that the electrode assembly may be more easily separated without damage to the sub-plate or the electrode assembly.

The height h of the protruding portion T may be 3 to 15 times, particularly 5 to 12 times a thickness of the sub-plate.

When the range of the height of the protruding portion is satisfied, damage to the sub-plate or the electrode assembly may be prevented during the process.

The shape of the protruding portion is not limited. The case in which at least a part of the protruding portion is a curved surface, specifically, the case in which at least a part, which is in contact with the electrode assembly, is a curved surface may be advantageous in preventing damage to the sub-plate or the electrode assembly.

The shapes of the two or more protruding portions T may be equal to or different from one another, particularly equal to one another.

Intervals q between the two or more protruding portions may be defined so that the electrode assembly may be easily separated from the sub-plate. For example, the interval q between the two or more protruding portions may be 0.5 to 2.5 cm, particularly 1 to 2 cm. With reference to FIG. 4, the interval q between the protruding portions T refers to a distance between the two protruding portions, i.e., a distance from a point, i.e., an end of any one protruding portion to a point at which the next protruding portion begins to protrude.

When the range of the interval between the protruding portions is satisfied, damage to the sub-plate or the electrode assembly may be prevented during the process.

In case that the number of protruding portions is three or more, the intervals between the protruding portions may be equal to or different from one another, particularly equal to one another.

As illustrated in FIG. 4, in case that the sub-plate has the structure in which the two or more protruding portions T spaced apart from one another are inflated, the time for which air is injected into or discharged from the flow path may be reduced, and the process time may be shortened in comparison with the structure that is inflated so that the middle portion M of the sub-plate is positioned at a greater distance from the support plate than the remaining portion, as illustrated in FIG. 5.

In addition, in the case of the structure in FIG. 4 having the two or more protruding portions, the electrode assembly may be stably supported by the plurality of protruding portions while air is injected or discharged, such that it is possible to prevent a direction of the electrode assembly from being distorted during a process of preventing adherence of the electrode assembly in comparison with the case in which the electrode assembly is supported by one protruding portion. In case that a device for transferring the electrode assembly only to a predetermined route is used, the position of the electrode assembly is not distorted.

As necessary, a second sub-plate may be additionally provided on the opposing surface to the surface of the sub-plate opposite to the support plate. The second sub-plate may be a polymer sheet.

The air supply part is not specially limited as long as the air supply part may supply air. As necessary, the air supply part may adjust the amount of air or the pressure of air. The distance from a part of the opposing surface to the surface of the sub-plate opposite to the support plate to the support plate may be adjusted by the amount or pressure of air blown by the air blowing unit.

### <Electrode Assembly Manufacturing Apparatus>

The above-mentioned electrode assembly manufacturing plates may be used for an electrode assembly manufacturing apparatus.

The electrode assembly manufacturing apparatus according to the embodiment of the present invention is characterized by including upper and lower plates configured to press the electrode assembly, and at least one of the upper plate and the lower plate includes the electrode assembly manufacturing plate according to the above-mentioned embodiments.

The electrode assembly manufacturing apparatus according to the embodiment of the present invention may include the upper and lower plates configured to press the electrode assembly, and at least one of the upper plate and the lower plate may include the electrode assembly manufacturing plate according to the above-mentioned embodiments.

The electrode assembly is positioned between the upper plate and the lower plate, and the sub-plate included in the upper or lower plate is positioned to be opposite to the electrode assembly.

The electrode assembly manufacturing apparatus may include a heater configured to heat the electrode assembly before or while the electrode assembly is pressed. At least one of the upper and lower plates may include the heater configured to heat the electrode assembly before or while the electrode assembly is pressed.

After the electrode assembly is pressed by using the upper plate and the lower plate, the electrode assembly is controlled to be separated by the operation of the distance control unit after the electrode assembly is pressed and heated, when necessary.

Only the upper plate, only the lower plate, or both the upper plate and the lower plate may be the electrode assembly manufacturing plate according to the above-mentioned embodiments. During the electrode assembly manufacturing process including the pressing and/or heating process, the electrode assembly may adhere to the upper plate and/or the lower plate. However, the above-mentioned plate according to the embodiments of the present invention may be used to effectively prevent the adherence of the electrode assembly. Therefore, it is possible to improve the efficiency of the process and provide the excellent electrode assembly.

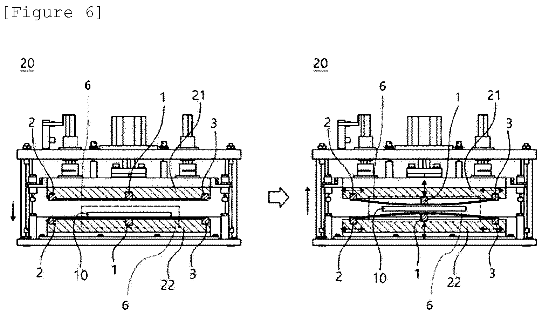

FIG. 6 illustrates a manufacturing apparatus 20 including the electrode assembly manufacturing plates according to the embodiment of the present invention as an upper plate 21 and a lower plate 22. The upper plate 21 moves toward the lower plate 22 and presses an electrode assembly 10 placed on the lower plate. In this case, the electrode assembly 10 may be heated by the heater (not illustrated). The heater may heat the electrode assembly 10 by increasing a temperature of the upper plate 21 and/or the lower plate 22 or increasing a temperature of the process ambience. Thereafter, when the upper plate 21 moves away from the lower plate 22, the vertical drive unit 1, which is the distance control unit, moves in a direction in which the vertical drive unit 1 pushes the sub-plate 6 from the support plate, such that the sub-plate 6 pushes the electrode assembly 10. In this case, the horizontal drive units 2 and 3 move toward the vertical drive unit 1 in accordance with a degree to which the vertical drive unit 1 moves, such that the horizontal drive units 2 and 3 may support the edge portions of the sub-plate 6 without damage to the sub-plate 6 even though the position of the edge portion of the sub-plate 6 is changed. Therefore, it is possible to effectively prevent the electrode assembly from adhering to the upper plate and/or the lower plate.

FIG. 6 illustrates the apparatus in which both the upper plate and the lower plate are the electrode assembly manufacturing plates according to the embodiments of the present invention. However, even the apparatus in which only any one of the upper and lower plates is the electrode assembly manufacturing plate according to the embodiments of the present invention may operate in the same way. FIG. 6 illustrates the manufacturing apparatus that employs the plate exemplarily illustrated in FIG. 1. However, the plate illustrated in FIGS. 2 to 5 may be applied to the manufacturing apparatus in the same way.

In case that both the upper plate and the lower plate are the electrode assembly manufacturing plates according to the embodiments of the present invention, the structures of the upper and lower plates may be identical to or different from each other. For example, the number of vertical drive units 1 provided on the upper plate and the number of vertical drive units 1 provided on the lower plate may be equal to or different from each other. For example, the upper plate may have one vertical drive unit 1, and the lower plate may have two vertical drive units 1, or vice versa.

An electrode assembly manufacturing apparatus according to another embodiment of the present invention is characterized by including: a stack table on which an electrode assembly is placed; a first electrode supply part configured to supply the first electrode to the stack table; a second electrode supply part configured to supply the second electrode to the stack table; and a separator supply part configured to supply the separator to the stack table, in which the stack table includes the electrode assembly manufacturing plate according to the above-mentioned embodiments.

An electrode assembly manufacturing apparatus according to another embodiment of the present invention is characterized by including: a stack table on which an electrode assembly is placed; a first electrode supply part configured to supply the first electrode to the stack table; a second electrode supply part configured to supply the second electrode to the stack table; and a separator supply part configured to supply the separator to the stack table, in which the stack table is the electrode assembly manufacturing plate according to the above-mentioned embodiments.

The electrode assembly is manufactured by stacking a first electrode, a separator, and a second electrode on the sub-plate of the electrode assembly manufacturing plate. After the stacking process is completely performed on the electrode assembly on the stack table, the electrode assembly is controlled to be separated by the operation of the distance control unit.

The electrode assembly manufacturing apparatus may include a heater configured to heat the electrode assembly during or after the process of stacking the electrode assembly. The stack table may include a heater configured to heat the electrode assembly during or after the process of stacking the electrode assembly.

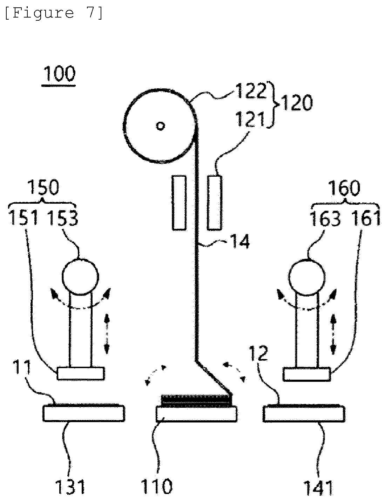

FIG. 7 illustrates an electrode assembly manufacturing apparatus 100 including a stack table 110, a first electrode supply part 150, a second electrode supply part 160, and a separator supply part 120.

The separator supply part 120 may include a separator heating part 121 and a separator roll 122. The separator heating part 121 may be selectively applied.

The first electrode supply part 150 transfers a first electrode placed on a first electrode accommodation portion 131 to the stack table and stacks the first electrode. The first electrode supply part 150 may include a first suction head 151 configured to vacuum-suck a first electrode 11 placed on the first electrode accommodation portion 131, and a first movement part 153 configured to move the first electrode 11 to the stack table 110.

The second electrode supply part 160 transfers a second electrode placed on a second electrode accommodation portion 141 to the stack table and stacks the second electrode. The second electrode supply part 160 may include a second suction head 161 configured to vacuum-suck a second electrode 12 placed on the second electrode accommodation portion 141, and a second movement part 163 configured to move the second electrode 12 to the stack table 110.

For example, the stack table 110 may rotate in the arrow directions illustrated in FIG. 7. In this case, the first electrode supply part 150 and the second electrode supply part 160 may rotate in the arrow directions and supply the first electrode and the second electrode to the stack table 110. In particular, in this case, because the stack table may also have a plate shape on which a stack may be placed, the stack table may also be a table including the separable sub-plate of the present invention.

The electrode assembly manufacturing apparatus 100 may include a heater (not illustrated) configured to heat the first electrode 11 placed on the first electrode accommodation portion 131 and/or heat the second electrode 12 placed on the second electrode accommodation portion 141. The heater may heat the first and/or the second electrode by increasing the temperature of the first electrode accommodation portion 131 and/or the second electrode accommodation portion 141 or increasing the temperature of the process ambience. In case that the electrode assembly manufacturing plate according to the present invention is used as the stack table, the electrode assembly may be easily separated from the stack table after the stacking process is completed on the basis of the principle described with reference to FIGS. 1 to 4.

The electrode assembly manufacturing apparatus according to the embodiment of the present invention may include the components typically used in the art in addition to the configuration in which the electrode assembly manufacturing plate according to the present invention is included as the stack table or the upper plate and/or the lower plate.

An electrode assembly manufactured by the electrode assembly manufacturing apparatus according to the embodiments of the present invention may include a first electrode, a separator, and a second electrode and have a structure in which the first electrode, the separator, and the second electrode are stacked in a zigzag manner.

In the present specification, a process of stacking the first electrodes and the second electrodes by disposing the first electrodes and the second electrodes alternately between separators 14 folded in a zigzag shape is called zigzag stacking. Specifically, the separators are stacked in a zigzag manner while being folded in a shape in which the separators are alternately disposed at a left side of the stacking axis and a right side of the stacking axis based on the stacking axis. Further, the first and second electrodes are alternately disposed and stacked between the stacked separators. In this case, the stacking axis means an axis parallel to a direction in which the first electrode, the separator, and the second electrode are stacked. The stacking axis means an imaginary axis passing through a center of the stack in which the electrodes and the separator are stacked.

The configuration in which the first electrodes and the second electrodes are disposed alternately between the separators means that the separators are stacked in the direction of the stacking axis while overlapping one another in a zigzag manner, and the first electrodes and the second electrodes are alternately stacked one by one in spaces (between the separators) defined when the separators overlap one another.

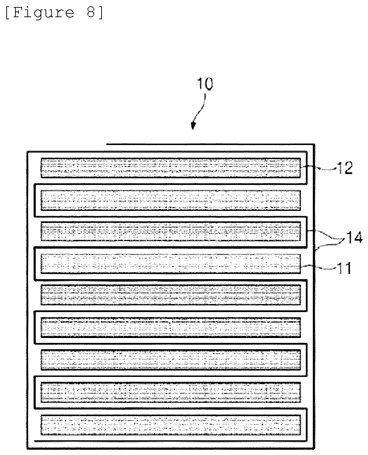

The electrode assembly 10 stacked in a zigzag shape according to FIG. 8 is a power generation element that may be charged or discharged. The electrode assembly 10 may be provided in the form in which the first electrode 11, the separator 14, and the second electrode 12 are alternately stacked and coupled. In this case, the electrode assembly 10 is provided in the form in which the separators 14 are folded in a zigzag manner, and the first electrodes 11 and the second electrodes 12 are alternately disposed between the folded separators 14. The first electrode is a positive electrode, and the second electrode is a negative electrode. Alternatively, the first electrode is a negative electrode, and the second electrode is a positive electrode.

The negative electrode is manufactured by applying negative electrode slurry including a negative electrode active material onto at least one surface of a negative electrode current collector and drying the negative electrode slurry. As necessary, the negative electrode slurry may further include additional components such as a conductive material, a binder, and a solvent. The positive electrode is manufactured by applying positive electrode slurry including a positive electrode active material onto at least one surface of a positive electrode current collector and drying the positive electrode slurry. As necessary, the positive electrode slurry may further include additional components such as a conductive material, a binder, and a solvent. The separator may include a porous polymer substrate and an organic/inorganic composite porous coating layer formed on at least one side surface of the polymer substrate. The organic/inorganic composite porous coating layer may include particulate binder resins and inorganic particles. The negative electrode active material, the positive electrode active material, the additional components, the type of separator, and the method of manufacturing the positive and negative electrodes may be used without limitation as long as the above-mentioned components are publicly known in the art within the range to which the above-mentioned description is applied.

### <Electrode Assembly Manufacturing Method>

The embodiment of the present invention provides a method of manufacturing an electrode assembly including a first electrode, a separator, and a second electrode by using the electrode assembly manufacturing plate of the present invention.

The electrode assembly manufacturing method according to the embodiment of the present invention is a method of manufacturing the electrode assembly including the first electrode, the separator, and the second electrode and includes: disposing a stack, which includes the first electrode, the separator, and the second electrode, between the upper plate and the lower plate; forming the electrode assembly by pressing the stack by moving at least one of the upper plate and the lower plate; and separating the electrode assembly from the upper plate and the lower plate, in which at least one of the upper plate and the lower plate includes the electrode assembly manufacturing plate according to the embodiment.

The electrode assembly manufacturing method according to the embodiment of the present invention is a method of manufacturing the electrode assembly including the first electrode, the separator, and the second electrode and includes: disposing a stack, which includes the first electrode, the separator, and the second electrode, between the upper plate and the lower plate; forming the electrode assembly by pressing the stack by moving at least one of the upper plate and the lower plate; and separating the electrode assembly from the upper plate and the lower plate, in which at least one of the upper plate and the lower plate may be the electrode assembly manufacturing plate according to the embodiment.

The stack, which includes the first electrode, the separator, and the second electrode, is positioned between the upper plate and the lower plate, and the sub-plate included in the upper or lower plate is disposed to be opposite to the stack. Thereafter, the upper plate presses the stack completely disposed while moving toward the lower plate, thereby forming the electrode assembly.

The pressing of the stack may include pressing the electrode assembly under a temperature condition of 50 to 90°C and a pressure condition of 0.5 to 6.0 MPa for 5 to 60 seconds. More particularly, the stack may be heated and pressed under a temperature condition of 65 to 90°C and a pressure condition of 1.0 to 6.0 MPa for 5 to 30 seconds. More particularly, the stack may be heated and pressed under a temperature condition of 65 to 85°C and a pressure condition of 3 to 5.5 MPa for 7 to 25 seconds.

During the heating and pressing processes that satisfy the condition, it is possible to improve the bonding force between the first electrode and the separator and between the separator and the second electrode without damaging the first electrode, the separator, and the second electrode. As a result, it is possible to improve the performance of the electrode assembly manufactured by pressing the stack.

In the embodiment of the present invention, the forming of the electrode assembly by pressing the stack by moving at least one of the upper plate and the lower plate may further include heating at least one of the upper plate and the lower plate before or while pressing the electrode assembly by using a heater (not illustrated) configured to heat the electrode assembly.

The heater may be included in at least one of the upper plate and the lower plate or provided as a separate component.

By the separating of the electrode assembly from the upper plate and the lower plate, the electrode assembly, which has been completely pressed, is separated in the state in which the electrode assembly is in contact with the upper plate and the lower plate.

In this case, because at least one of the upper plate and the lower plate is used as the above-mentioned electrode assembly manufacturing plate, it is possible to effectively prevent the electrode assembly from adhering to the upper plate and/or the lower plate.

In the embodiment of the present invention, the separating of the electrode assembly from the upper plate and the lower plate may include pushing a part of an opposing surface to a surface of the sub-plate, which is opposite to the support plate, from the support plate by an operation of the distance control unit so that a distance from a part of the opposing surface to the support plate is different from a distance from the remaining portion to the support plate.

Specifically, when the upper plate 21 moves away from the lower plate 22, the vertical drive unit 1, which is the distance control unit, moves in a direction in which the vertical drive unit 1 pushes the sub-plate 6 from the support plate, such that the sub-plate 6 pushes the electrode assembly 10. In this case, the horizontal drive units 2 and 3 move toward the vertical drive unit 1 in accordance with a degree to which the vertical drive unit 1 moves, such that the horizontal drive units 2 and 3 may support the edge portions of the sub-plate 6 without damage to the sub-plate 6 even though the position of the edge portion of the sub-plate 6 is changed.

The electrode assembly manufacturing method according to the embodiment of the present invention is a method of manufacturing the electrode assembly including the first electrode, the separator, and the second electrode and includes: a stacking step of stacking a stack, which includes the first electrode, the separator, and the second electrode, on the stack table; forming the electrode assembly by heating and pressing the stack; and separating the electrode assembly from the stack table, in which the stack table includes the electrode assembly manufacturing plate according to the embodiment.

The electrode assembly manufacturing method according to the embodiment of the present invention is a method of manufacturing the electrode assembly including the first electrode, the separator, and the second electrode and includes: a stacking step of stacking a stack, which includes the first electrode, the separator, and the second electrode, on the stack table; forming the electrode assembly by heating and pressing the stack; and separating the electrode assembly from the stack table, in which the stack table may be the electrode assembly manufacturing plate according to the embodiment.

In the embodiment of the present invention, the stacking step may include: supplying the first electrode to the stack table; supplying the second electrode to the stack table; and supplying the separator to the stack table.

The forming of the electrode assembly by heating and pressing the stack may further include performing an operation by using the lower plate configured to apply heat and configured such that the electrode assembly to be heated and pressed is placed on the lower plate and the upper plate corresponding to the lower plate and configured to apply heat. The lower and upper plates may be a pair of pressing blocks.

The forming of the electrode assembly by heating and pressing the stack may include heating and pressing the stack in the direction of the stacking axis. In addition, the heating and pressing of the stack may be performed by a press heater to be described below.

In addition, in the embodiment of the present invention, the heating and pressing of the stack may include: moving the stack between the pair of pressing blocks including the press heaters; surface-pressing the stack by moving the pair of pressing blocks in the direction of the stacking axis; and heating the stack.

The pair of pressing blocks may be the lower plate, and the upper plate that faces the lower plate.

In addition, in the embodiment of the present invention, the forming of the electrode assembly by heating and pressing the stack may include: moving the stack between the pair of pressing blocks; surface-pressing the stack by moving the pair of pressing blocks in the direction of the stacking axis; and heating the stack by the press heater provided separately.

That is, the press heater may be included in the pressing block or provided as a separate component.

The electrode assembly manufacturing method according to the embodiment of the present invention may further include releasing the gripper before the heat press step.

That is, the releasing of the gripper may include stopping the operation of pressing the upper surface of the stack by the gripper, and spacing the gripper from the stack.

In addition, in the forming of the electrode assembly by heating and pressing the stack, the moving of the stack between the pair of pressing blocks including the press heaters may include not only moving the stack but also moving the stack together with the stack table in a state in which the stack is placed on the stack table. In this case, the objects to be heated and pressed by the pair of pressing blocks and the press heaters may mean the stack and the stack table.

In the embodiment of the present invention, the forming of the electrode assembly by heating and pressing the stack may include heating and pressing the stack under a temperature condition of 50 to 90°C and a pressure condition of 0.5 to 6.0 MPa for 5 to 60 seconds. More particularly, the stack may be heated and pressed under a temperature condition of 65 to 90°C and a pressure condition of 1.0 to 6.0 MPa for 5 to 30 seconds. More particularly, the stack may be heated and pressed under a temperature condition of 65 to 85°C and a pressure condition of 3 to 5.5 MPa for 7 to 25 seconds.

During the heating and pressing processes that satisfy the condition, it is possible to improve the bonding force between the first electrode and the separator and between the separator and the second electrode without damaging the first electrode, the separator, and the second electrode. As a result, the performance of the electrode assembly may be improved.

By the separating of the electrode assembly from the stack table, the electrode assembly, which has been completely pressed, is separated in the state in which the electrode assembly is in contact with the stack table.

In this case, because the above-mentioned electrode assembly manufacturing plate is used as the stack table, it is possible to effectively prevent the electrode assembly from adhering to the stack table.

In the embodiment of the present invention, the separating of the electrode assembly from the stack table may include pushing a part of the opposing surface to the surface of the sub-plate, which is opposite to the support plate, from the support plate by the operation of the distance control unit so that a distance from a part of the opposing surface to the support plate is different from a distance from the remaining portion to the support plate.

In case that the electrode assembly manufacturing plate according to the present invention is used as the stack table, the electrode assembly may be easily separated from the stack table after the stacking process is completed on the basis of the principle described with reference to FIGS. 1 to 4.

While the embodiments of the present invention have been described above, the scope of the present invention is not limited to, and it will be obvious to those skilled in the art to which the present invention pertains that various modifications and alterations may be made without departing from the technical spirit of the present invention.

## Claims

1. An electrode assembly manufacturing plate comprising:
a support plate;
a sub-plate provided on one surface of the support plate; and
a distance control unit provided on the support plate and configured to push a part of an opposing surface to a surface of the sub-plate, which is opposite to the support plate, from the support plate so that a distance from a part of the opposing surface to the support plate is different from a distance from the remaining portion to the support plate.

2. The electrode assembly manufacturing plate of claim 1, wherein the sub-plate is made of a flexible material so that at least one surface thereof is reversibly transformed from a flat state to a non-flat state by the distance control unit.

3. The electrode assembly manufacturing plate of claim 1, wherein the sub-plate is a polymer sheet.

4. The electrode assembly manufacturing plate of claim 1, wherein the distance control unit is a vertical drive unit configured to support a part of the sub-plate and move in a vertical direction relative to one surface of the support plate.

5. The electrode assembly manufacturing plate of claim 4, wherein the vertical drive unit is configured to support a middle portion spaced apart from any one pair of edge portions of the sub-plate opposite to each other and support 50% or more of a width of the sub-plate.

6. The electrode assembly manufacturing plate of claim 5, wherein the vertical drive unit has a bar shape configured to support the middle portion spaced apart from the pair of edge portions of the sub-plate opposite to each other and support 90% or more of the width of the sub-plate.

7. The electrode assembly manufacturing plate of claim 5, further comprising:
an auxiliary support unit provided on the support plate and configured to support at least a part of an edge portion of the sub-plate when a position of the edge portion of the sub-plate is changed by a change in distance from a part of the sub-plate to the support plate.

8. The electrode assembly manufacturing plate of claim 7, wherein the auxiliary support unit is a horizontal drive unit configured to move in a horizontal direction relative to one surface of the support plate.

9. The electrode assembly manufacturing plate of claim 7, wherein the auxiliary support unit comprises an elastic member reversibly changeable in length or shape.

10. The electrode assembly manufacturing plate of claim 9, wherein the elastic member is a spring member.

11. The electrode assembly manufacturing plate of claim 7, comprising:
four auxiliary support units configured to respectively support four edge portions of the sub-plate.

12. The electrode assembly manufacturing plate of claim 1, wherein the sub-plate has a structure that is inflated when air is injected into the sub-plate, and the distance control unit is an air blowing unit configured to inject air into the sub-plate.

13. The electrode assembly manufacturing plate of claim 12, wherein the sub-plate has an air injection opening, and the air blowing unit comprises an air supply part connected to the air injection opening of the sub-plate and configured to supply air.

14. The electrode assembly manufacturing plate of claim 12, wherein one surface of the sub-plate is fixed to the support plate, and
wherein when air is injected into the sub-plate, a part of the other surface of the sub-plate is structured to be inflated so that a distance from a part of the other surface of the sub-plate to the support plate is different from a distance from the remaining portion to the support plate.

15. The electrode assembly manufacturing plate of claim 14, wherein the sub-plate has a structure configured to be inflated when air is injected thereinto so that a middle portion spaced apart from any one pair of edge portions of the other surface of the sub-plate opposite to each other is positioned at a greater distance from the support plate than the remaining portion, or the sub-plate has a structure in which two or more protruding portions of the other surface of the sub-plate spaced apart from one another are inflated.

16. The electrode assembly manufacturing plate of claim 12, further comprising:
a second sub-plate provided on the opposing surface to the surface of the sub-plate opposite to the support plate.

17. An electrode assembly manufacturing apparatus comprising:
upper and lower plates configured to press an electrode assembly comprising a first electrode, a separator, and a second electrode,
wherein at least one of the upper plate and the lower plate comprises the electrode assembly manufacturing plate of any one of claims 1 to 16.

18. The electrode assembly manufacturing apparatus of claim 17, wherein at least one of the upper plate and the lower plate comprises a heater configured to heat the electrode assembly before or while the electrode assembly is pressed.

19. An electrode assembly manufacturing apparatus comprising:
a stack table on which an electrode assembly comprising a first electrode, a separator, and a second electrode is placed;
a first electrode supply part configured to supply the first electrode to the stack table;
a second electrode supply part configured to supply the second electrode to the stack table; and
a separator supply part configured to supply the separator to the stack table,
wherein the stack table comprises the electrode assembly manufacturing plate of any one of claims 1 to 16.

20. The electrode assembly manufacturing apparatus of claim 19, wherein the stack table comprises a heater configured to heat the electrode assembly during or after a process of stacking the electrode assembly.

21. A method of manufacturing an electrode assembly comprising a first electrode, a separator, and a second electrode, the method comprising:
disposing a stack, which comprises the first electrode, the separator, and the second electrode, between upper and lower plates;
forming the electrode assembly by pressing the stack by moving at least one of the upper plate and the lower plate; and
separating the electrode assembly from the upper plate and the lower plate,
wherein at least one of the upper plate and the lower plate comprises the electrode assembly manufacturing plate of any one of claims 1 to 16.

22. The method of claim 21, wherein the separating of the electrode assembly from the upper plate and the lower plate comprises pushing a part of an opposing surface to a surface of the sub-plate, which is opposite to the support plate, from the support plate by an operation of the distance control unit so that a distance from a part of the opposing surface to the support plate is different from a distance from the remaining portion to the support plate.

23. A method of manufacturing an electrode assembly comprising a first electrode, a separator, and a second electrode, the method comprising:
a stacking step of stacking a stack, which comprises the first electrode, the separator, and the second electrode, on a stack table;
forming the electrode assembly by heating and pressing the stack; and
separating the electrode assembly from the stack table,
wherein the stack table comprises the electrode assembly manufacturing plate of any one of claims 1 to 16.

24. The method of claim 23, wherein the separating of the electrode assembly from the stack table comprises pushing a part of an opposing surface to a surface of the sub-plate, which is opposite to the support plate, from the support plate by an operation of the distance control unit so that a distance from a part of the opposing surface to the support plate is different from a distance from the remaining portion to the support plate.
